# EUROPEAN PATENT SPECIFICATION

(11) **EP 2 906 860 B1**
(45) Date of publication and mention of the grant of the patent: **20.09.2017**
(21) Application number: 13844603.4
(22) Date of filing: 27.09.2013
(51) Int. Cl.: F16K 15/06

(54) **CHECK VALVE**
RÜCKSCHLAGVENTIL
CLAPET ANTIRETOUR

(30) Priority: 12.10.2012 RU 2012143695
(43) Date of publication of application: 19.08.2015
(73) Proprietor: Yazykov, Andrey Yurievich, Moscow 119619 (RU)
(72) Inventor: Yazykov, Andrey Yurievich, Moscow 119619 (RU)
(74) Representative: Smirnov, Alexander
(86) International application number: PCT/RU2013/000852
(87) International publication number: WO 2014/058350

(56) References cited:
- AT-B- 411 924
- AU-B2- 465 656
- GB-A- 693 296
- JP-A- S5 974 400
- JP-A- 2002 168 357
- RU-C1- 2 250 405
- RU-U1- 92 388
- US-A- 1 593 519
- US-A- 3 822 970
- US-A- 5 117 861
- US-B2- 6 837 267

## Description

### Field of the Invention

The useful model relates to the field of hydraulics and is designed to prevent backward flow of fluid, tight shutoff of main line in backward stream direction. It is used with surface and submersible pumps.

### Prior Art

From the prior art It is known a springless check or non-return valve according to the GB patent No. 693296 (patent application No. 20596/50, 19.08.1950, publication 24.06.1953) comprising a valve casing provided at oppositely aligned ends with inlet and outlet orifices and means for coupling said casing to and between the ends of two pipes of equal diameter. The valve according to the prior art has a chamber of larger diameter than the diameter of the pipes to be coupled to the valve casing. There is a sleeve inserted in said valve casing. The inlet end of the sleeve forms a sealing member. The other end of the sleeve is formed as an annular valve seat. There is a perforated transverse bridge in the sleeve.

An apparatus according to GB 693 296 known from the prior art does not contain all the features of the invention as applied for the patent protection by the EP application in question, and on that reason can not achieve a technical effect achievable in the claimed invention.

The valve known from the prior art represents a check valve comprising integrally made body and a seat with an inlet channel and guide arranged in the body, as well as an installed in the guide bushing one hole coaxially with the seat, the stem with a plate gate arranged with a possibility of axial displacement and interaction with the seat during action of a flow from the side of outlet channel, which is designed in a form of outlet pipe.

In the known device under analysis the guide has not a recess for placement of one outlet pipe end.

In the apparatus according to GB 693 296 the hole of the guide bushing has a short length, which is far less than the length of the stem for directing the stem. Under these circumstances it is not possible to obtain a coincidence of axes of the plate and the seat. Therefore, the plate gate has members interacting with the seat at the end of the stroke of the plate and crossruffing a considerable portion of the area of passage/flow section of the seat. Furthermore, due to presence of the said members it becomes more complicated to provided an absolute coincidence of axes of the hole in the guide bushing and members, which are to be made in different pieces connected in threaded assembly by the thread, all that making the entire apparatus less reliable due to making it more sensitive to contamination.

From the prior art it is also known an axial flow check valve, which comprises a body, locking elements, holes for fluid or gas streaming through (SU No. 1830121, RU No. 2205310).

Disadvantages of the known check valves are their in-service unreliability, especially at high pressures, and rapid wear of surfaces ensuring their tightness. An axial flow check valve is also known comprising an outer body with inlet and outlet channels in the cavity of which, in grooves bored on inner surfaces of inlet and outlet channels, by means of threaded connections, the inner cone-shaped fairing is fixed- the locking member case and the seat. In the cavity of inner case/fairing, the locking member with working surface in the form of a sphere is installed. Mechanism of locking member displacement includes compression spring mounted on stem moving in plain bearings fixed in guide bushing fixed in fairing. The spring serves to close the valve, opening of which occurs under action of hydrodynamic forces of flowing stream. The seat is made in form of ring with tapered surface contacting with locking member sphere surface. Tapered surface of the seat installed in inner cavity of outer body and spherical form of inner cavity in outer body define the shape of circular channel between the surfaces of outer and inner bodies forming with inlet pipe the valve opening area in form of a Venturi nozzle (RU No. 2417335).

The known design is characterized by high hydraulic resistance, structural complexity and low processability due to the need to ensure high dimensional accuracy and mutual arrangement of parts interacting with each other, as the locking member is made as multipart component with a complex to manufacture Venturi nozzle. The disadvantage of the valve is also the possibility of losing axial orientation of locking member. During mechanical impacts of foreign objects often getting into the valve with stream of transported medium a deflection of locking member, change of its contacting surface position relative to seat contact surface is possible which also results in decrease of valve tightness.

The closest in technical essence is a flat plate gate check .valve comprising a body with outlet channel and inner cylindrical borings, seat with inlet channel and installed in the body borings spring-loaded self-setting flat plate gate with shank (stem), therewith the valve body is made in form of a two-stage cylindrical bushing with coaxially arranged inner stepped borings; on peripheral surface of bushing larger stage there are formed three evenly spaced and directed in parallel to its axis working output through openings with partitions separating them, and collet elastic elements of which are made in form of a split ring with inner shoulders connected with bushing (body) by the said partitions which are the guiding elements for placed inside spring-loaded plate gate interacting with seat tightly inserted into the bushing through circular boring of the seat and shoulders of collet elastic elements, therewith the larger stage of bushing is provided with a distant from ledge edge (support end face) circular recess of semi-oval cross section, and the smaller stage is provided with outer circular turning. Valve seat is made with circular sealing element on outer cylindrical surface which diameter corresponds to mounting outer diameter of larger bushing stage (RU No. 2250405, prototype).

Disadvantages of the known check valve are high hydraulic resistance, complexity of assembly-disassembly, low durability (service life) and performance instability stipulated by gradual change of spring characteristics and high sensitivity to contamination of working fluid by solid particles due to large contact area of seat and gate and short length of stem guides. These particles getting into contact area results in loss of check valve tightness that reduces the reliability of its operation.

### Summary of the invention

The invention is defined by a check valve according to claim 1. The engineering problem of the useful model is the construction of effective check valve and widening the array of check valves.

The technical result providing solution for the problem set is in simplification of mounting and assembling/disassembling the valve with a minimum number of operations and moved parts, for which it is sufficient to unscrew the thread of body with nut coupling, in reducing weight as well as in improvement of reliability and durability thanks to the absence of spring and larger length of stem guiding in holes of two guides which reduces sensitivity to contaminations and to hydrodynamic impacts on the gate, reducing hydrodynamic resistance. Therewith the process of valve manufacture of plastic is simplified and cost of the product is reduced.

The essence of useful model is that the check valve comprises integrally made body and seat with inlet channel, arranged in body guides, as well as installed in guide holes coaxially with seat stem with plate gate arranged with a possibility of axial displacement and engagement with the seat under the influence of flow from outlet channel side which is designed as a pipe, and guides are made with recess for placement of one end of pipe, on which concentrically and in axial alignment with guides the collet clamp and nut are placed made with a taper boring crimping collet clamp and with threaded hole mated with thread formed on body.

Preferably, locking and sealing rings are successively put on pipe via collet clamp and guides, the guides are designed as two successively installed in body guide bushings each of which has inclined partitions converging to central ring where the hole for stem is provided, and peripheral cylindrical band with outer surface for installation in body and inner surface for placement of outlet channel pipe connected with openings formed between partitions with the seat, therewith the bushings area installed in axial alignment and faced to each other with bases of inclined partitions connected with inner surface of peripheral band by radial ribs.

Therewith guide bushings are made of plastic, wherein on end face of peripheral band of each of them there are tangs and holes for matching holes and tangs on the other bushing end face, central ring of each bushing is made with grooves around the stem hole, the plate gate is made on side of interaction with seat with rounded tang in center and is provided with elastic sealing ring. Valve parts, in general are made of plastic, therewith body and nut are made stepped and provided with outer radial ribs.

### Short description of drawings

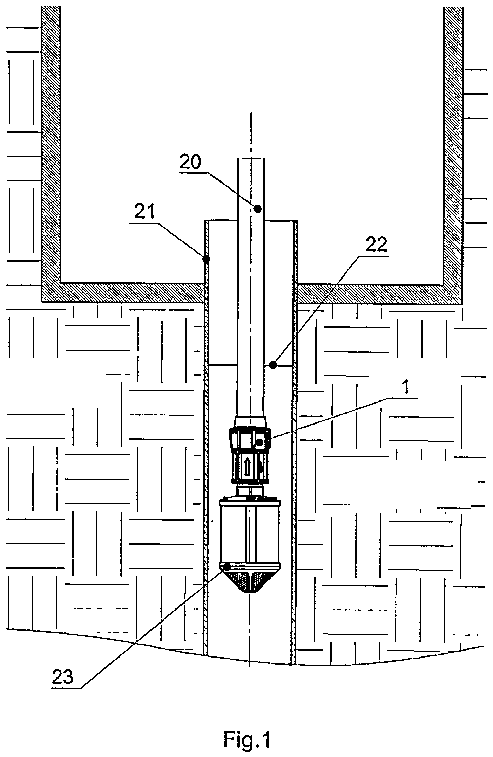

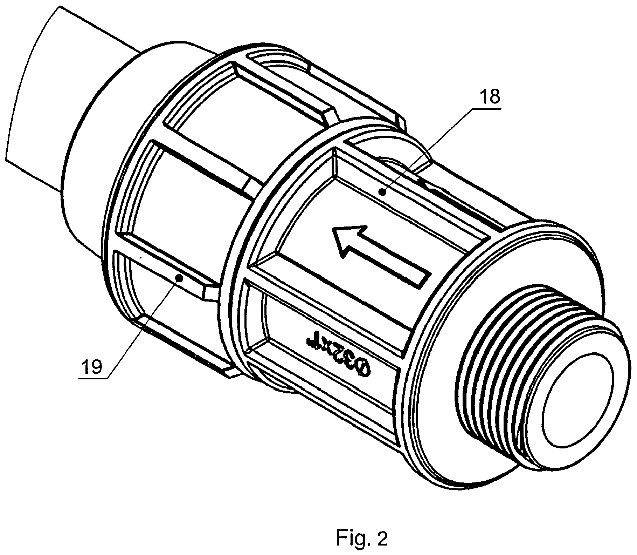

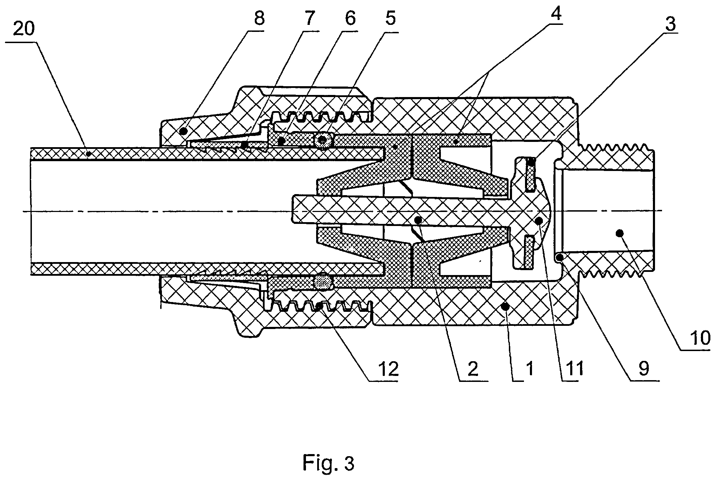

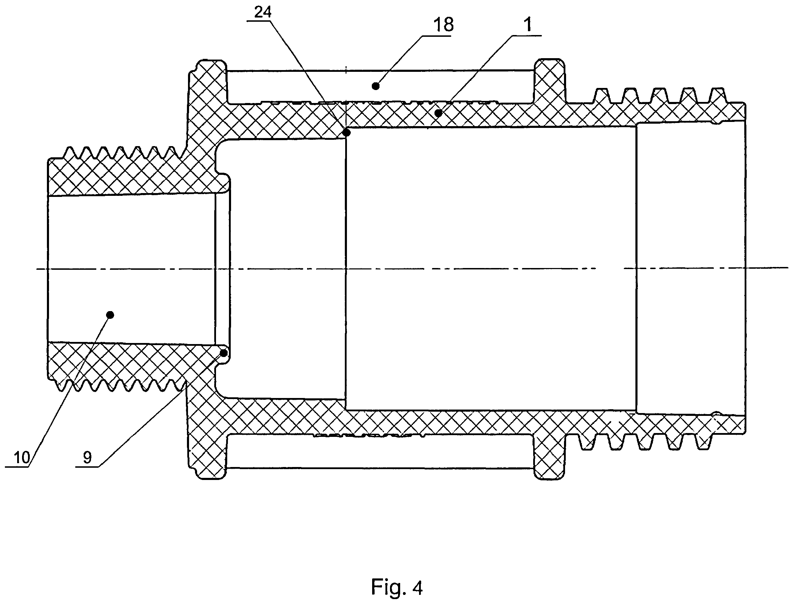

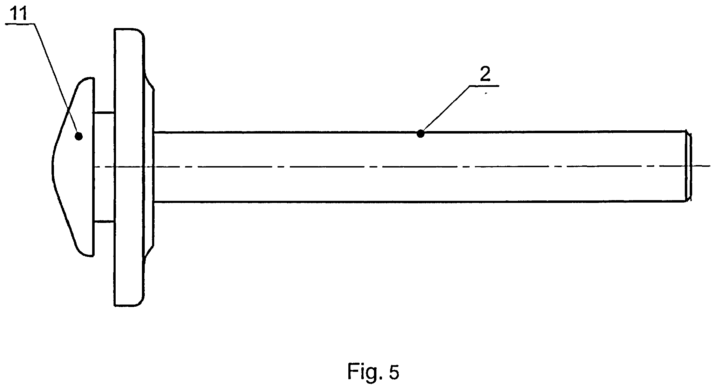

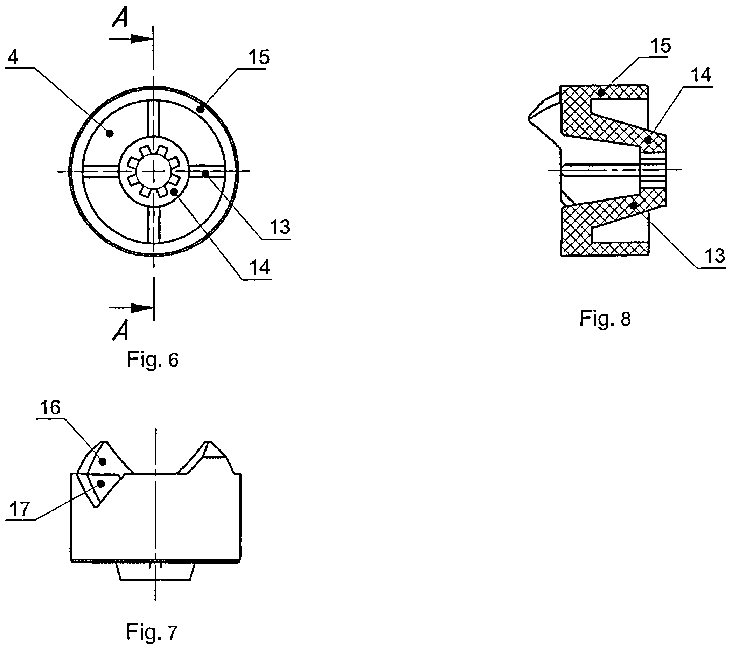

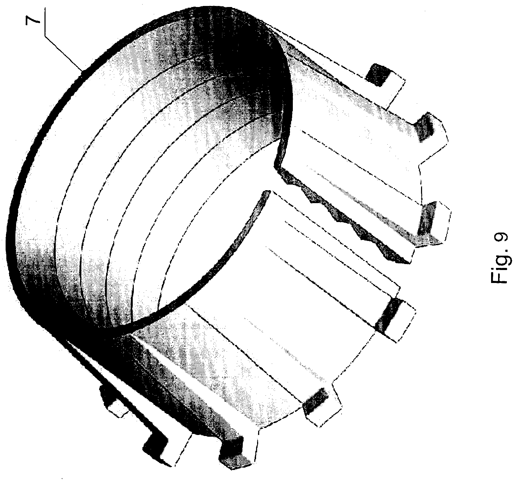

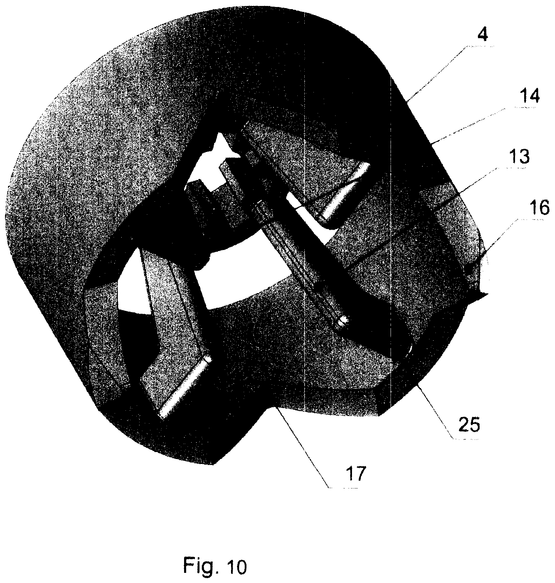

Fig. 1 shows a scheme of check valve installation in well, Fig. 2 is valve general view in three-dimensional (axonometric) projection, Fig. 3 is longitudinal section view of Fig; 2, Fig. 4 is longitudinal section view of body, Fig. 5 represents gate with stem, Fig. 6 is guide bushing, Fig. 7 is A-A section of Fig. 6, Fig. 8 is top view of Fig. 6, Fig. 9 is collet clamp general view in three-dimensional (axonometric) projection, in Fig. 10 is guide bushing general view in three-dimensional (axonometric) projection.

Check valve comprises made integrally body 1 and seat 9 (concentric band on valve body 1) with inlet channel 10, stem 2 guides 4 arranged in body 1, as well as stem 2 with plate gate 11 (plate head) installed concentrically with seat 9 in guides 4, arranged with possibility of axial displacement and interaction with seat 9 during action of flow from the side of outlet channel. The output channel is designed as a coaxial with channel 10 pipe 20 of HDPE (high density polyethylene) made, preferably, integrally with pump suction main line (not shown). Guide bushings 4 are designed with possibility of placement in the recess of one of them of one end of pipe 20, on which concentrically and coaxially with guides the collet clamp 7 and nut 8 are put made with tapered boring crimping collet clamp 7 and with threaded hole 12 mated with thread cut on body 1. Collet clamp 7 is preferably has on inner surface triangular tangs (not denoted). Incisions can be made and/or on pipe 20.

Between the collet clamp 7 and guides 4 on pipe 20 there are successively put (installed) locking ring 6 and sealing ring 5.
Guides 4 are designed in form of two successively installed in body 1 bushings each of which has inclined partitions 13 converging to central ring 14 where the hole for stem 2 is provided, and peripheral cylindrical band 15 with outer and inner cylindrical surfaces. Outer surface of both guide bushings 4 is used for their installation in body 1. Inner cylindrical surface of one of guide bushings 4 is used for placement in circular recess formed by it the end of pipe 20 of outlet channel. Pipe 20 of outlet channel is connected with openings formed between partitions 13 with seat 9, therewith guide bushings 4 are installed coaxially and faced to each other with bases of inclined partitions 13 connected with inner surface of peripheral band 15 by radial ribs 25.

Thus, guide bushings serve for coaxial orientation of both pipe 20 and stem 2 with plate gate 11.

Thus, rings 14 are arranged at maximum distance between each other to form an elongated, i.e. the most reliable, guiding base for movement and installation of stem 2 several times greater than its diameter.

The body 1 has ledge .24 (difference in diameters of inner cylindrical surface) for resting the bushing 4 band 15 during valve assembly (installation of bushing 4 into body 1 from the side of pipe 20).
Guide bushings 4 are made of plastic, wherein at one face end of peripheral band 15 of each of them there are tangs 16 and recesses 17 for mating recesses 17 and tangs 16, respectively, on mating end face 15 of another bushing 4.

Central ring 14 of each of bushings 4 is made with grooves around the hole for stem 2.

Plate gate 11 is designed at the side of interaction with seat 9 with a rounded tang in the center and is provided with elastic sealing ring 3. Parts 1, 2, 4, 6, 7, 8 of the valve are made of plastic.

Body 1 and nut 8 are designed stepped (with portions of outer surface in different diameters) and provided with outer radial ribs 18, 19, respectively.

The valve is designed to be installed in well casing pipe 21 below the level 22 of water table, sequentially, over water intake filter 23.

The valve is implemented as a plastic check valve with outlet to HDPE (high density polyethylene) pipe.

### Detailed Description of the Invention

### Preferred embodiment

The check valve is used as follows.
The valve is installed in well casing pipe 21 on pipeline 20 of pump suction main line so that the arrow on its body 1 coincides with nominal axial direction of pumpable fluid medium. The valve design allows for mounting its body 1 with outlet channel coaxially with seat 9 directly on suction pipe 20 of pump with sealing it by circular section ring 5 and locking it with collet clamp 7 crimped with nut 8 which is screwed onto thread on body 1 with threaded hole 12. Body 1 from the side of inlet channel 10 has a threaded portion for connection to pumps, water intake filters and other elements of water supply systems. When a flowing medium comes through a filter from well into the inlet channel 10 the gate 11 with stem 2 are raised above seat 9 and the medium through the openings formed between partitions 13 and having minimum hydraulic resistance enters into pipe 20 and further to pump suction with minimal losses. When there is no flow, rate the valve is closed under the action of fluid column above the valve in suction pipe of the pump acting on stem 2 and pressing on it gate 11 via sealing 3 to seat 9. Rings 14 of guide bushings 4 form with their openings two slider bearing for movement of stem 2, whereby the latter has the possibility of consistent axial displacement (with no skewing) for lifting gate 1 1 off seat 9 during flow passage and returning gate 1 1 with elastic sealing ring 3 into pressed against seat 9 condition in the absence of water flow rate.

The design allows easy installation into hydraulic main line - on pipe 20, repairability and not requiring high qualification assembling/disassembling of valve, for which it is sufficient unscrew the thread in hole 12 of body 1 with nut 9 connection (with rotating by hand by differently colored ribs 18, 19) and remove the guide bushings 4 and stem 2 for inspection of their status and, if necessary, replacement. Thanks to the absence of spring with large length in direction of stem 2 the sensitivity to contaminations and to hydrodynamic impacts on gate 11 is reduced. Hydraulic resistance of the declared valve is minimal since flowing stream does not overcome pressing force of the spring. Assembly or repair of valve are carried out with minimum number of operations, there is no need to install spring which reduces the possibility of assembler errors and valve breakdowns. Valve weight is minimal. Another advantage of this design is absence of metal parts and springs, its low cost.

### Industrial Application

The present invention is embodied with multipurpose equipment extensively employed by the industry.

## Claims

1. A check valve comprising made integrally a body (1) and a seat (9) with an inlet channel (10), guides (4) arranged in the body (1), as well as a stem (2) with a plate gate (11) installed in the guides (4) holes coaxially with the seat (9), arranged with a possibility of an axial displacement and interaction with the seat (9) during action of a flow from the side of outlet channel (20), which is designed in a form of an outlet pipe (20), wherein the guides (4) are made with a recess for a placement of one end of the outlet pipe (20), on which concentrically and coaxially with the guides (4) a collet clamp (7) and a nut (8) are put, made with a tapered boring crimping the collet clamp (7) and with a threaded hole (12) mated with a thread cut provided on the body (1), wherein the guides (4) are made in a form of two guide bushings (4) successively installed in the body (1) each of which has inclined partitions (13) converging towards a central ring (14) where the hole for the stem (2) is provided, and a peripheral cylindrical band (15) with an outer surface for installation in the body (1) and with an inner surface for a placement of the output pipe (20) connected with windows formed between the partitions (13) with the seat (9), wherein the guide bushings (4) are installed coaxially and faced with each other by bases of the inclined partitions (13) connected with inner surface of the peripheral band (15) by radial ribs (25).

2. The valve according to Claim 1, **characterized in that** the locking ring (6) and the sealing ring (5) are put successively on the pipe (20) between the collet clamp (7) and the guide bushings (4).

3. The valve according to Claim 1 **characterized in that** the guide bushings (4) are made of plastic, therewith at end face of the peripheral band (15) of each of them there are tangs (16) and holes (17) for the matching holes (17) and the tangs (16) on the end face of the other guide bushings (4).

4. The valve according to Claim 1, **characterized in that** the central ring (14) of each guide bushing (4) is made with grooves around the hole for the stem (2).

5. The valve according to claim 1, **characterized in that** the plate gate (11) is made on the side of interaction with the seat (2) with a rounded tang in the center and is provided with an elastic sealing ring (3).

6. The valve according to claim 1, **characterized in that** its parts are made of plastic.

7. The valve according to claim 1, **characterized in that** the body (1) and the nut (8) are made stepped and provided with outer radial ribs (18, 19).

## Patentansprüche

1. Rückschlagventil, umfassend einen Körper (1) und einen darin ausgebildeten Sitz (9) mit einem Einlasskanal (10), im Körper (1) ausgebildete Führungen (4), sowie einen in den Führungen (4) koaxial mit dem Sitz (9) angeordneten Ventilstössel (2) mit einem Tellerschieber (11), der so angeordnet ist, dass es die Möglichkeit eines Axialversatzes und einer Wechselwirkung mit dem Sitz (9) während der Bewegung des Flusses von der Seite des Auslasskanals (20), der in Form eines Auslassrohres (20) ausgebildet ist, besteht, wobei die Führungen (4) mit einer Vertiefung zum Anbringen des einen Endes des Auslassrohrs (20) ausgeführt sind, auf welches konzentrisch und koaxial mit den Führungen (4) eine Spannzange (7) und eine Mutter (8) aufgesetzt werden, wobei letztere mit einer, die Spannzange (7) umschiessenden Kegelausbohrung ausgeführt ist und eine Gewindebohrung (12) aufweist, die mit einem Gewinde, das im Körper (1) vorhanden ist, gekoppelt wird, wobei die Führungen (4) in Form von zwei Führungsbuchsen (4) ausgeführt sind, die hintereinander im Körper (1) angeordnet sind, wobei jede von denen geneigte Trennwände (13) aufweist, die in Richtung zum Zentralring (14) zusammenlaufen, wo die Öffnung für den Ventilstössel (2) vorhanden ist; und ein zylindrisches peripheres Band (15) mit einer äußeren Oberfläche für Montage im Körper (1) und mit einer inneren Oberfläche zum Anbringen des Auslassrohres (20), das mit den Fenstern verbunden ist, die zwischen den Trennwänden (13) mit dem Sitz (9) gebildet sind, wobei die Führungsbuchsen (4) koaxial angebracht sind und gegen einander mit den Basen der Trennwände (13) gewandt sind, die mit innerer Oberfläche des peripheren Bandes (15) durch Radialrippen (25) verbunden sind.

2. Ventil nach Anspruch 1, **dadurch gekennzeichnet, dass** der Abschlussring (6) und der Dichtungsring (5) hintereinander auf das Rohr (20) zwischen der Spannzange (7) und den Führungsbuchsen (4) aufgesetzt sind.

3. Ventil nach Anspruch 1, **dadurch gekennzeichnet, dass** die Führungsbuchsen (4) aus Plastik hergestellt sind, wobei auf der Stirnseite des peripheren Bandes (15) jeweils Vorsprünge (16) und Öffnungen (17) für die entsprechenden Öffnungen (17) und Vorsprüngen (16) an der Stirnseite anderer Führungsbuchsen (4) ausgebildet sind.

4. Ventil nach Anspruch 1, **dadurch gekennzeichnet, dass** der Zentralring (14) jeder Führungsbuchse (4) mit Nuten um die Öffnung für den Ventilstössel (2) ausgebildet ist.

5. Ventil nach Anspruch 1, **dadurch gekennzeichnet, dass** Tellerschieber (11) an der Seite der Wechselwirkung mit dem Sitz (2) mit einem runden Vorsprung im Zentrum ausgebildet ist und mit einem elastischen Dichtungsring (3) versehen ist.

6. Ventil nach Anspruch 1, **dadurch gekennzeichnet, dass** seine Teile aus Plastik hergestellt sind.

7. Ventil nach Anspruch 1, **dadurch gekennzeichnet, dass** der Körper (1) und die Mutter (8) stufenförmig sind un mit äußeren Radialrippen (18, 19) versehen sind.

## Revendications

1. Un clapet anti-retour, composé d'une cage (1) et d'une siège (9), formées d'un seul tenant conjointement à un conduit d'entrée (10), des bagues de guidage (4), installées dans la cage (1), ainsi qu'une tige (2) avec un élément d'arrêt à plaques (11), installé dans les bagues de guidage (4), des orifices, disposées coaxialement par rapport à la siège (9), situées d'une manière permettant le déplacement axial et l'interaction avec la siège (9) pendant le mouvement du flux du côté d'un canal d'évacuation (20), fait en forme du tuyau d'évacuation (20), cependant les bagues de guidage (4) sont formées avec un enfoncement pour l'installation d'une extrémité du tuyau d'évacuation (20), qui abrite, concentriquement et coaxialement aux bagues de guidage (4), un mandrin à main (7) et un écrou (8), formés avec un alésage conique, limitant le mandrin à main (7), et avec un trou taraudé (12), qui est raccordé avec un filetage sur la cage (1), cependant les guides (4) sont faites en forme de deux bagues de guidage (4), installées en série sur la cage (1), dont chacune dispose des segments inclinés (13), se joignant dans la direction d'une bague centrale (14), abritant l'orifice pour la tige (2) et une bande périphérique cylindrique (15), dont la surface extérieure est destinée à l'installation dans la cage (1), et la surface intérieure - pour l'installation du tuyau d'évacuation (20), qui est raccordé avec les lumières, formées entre les cloisons (13) et la siège (9), cependant les bagues de guidage (4) sont installées coaxialement et sont orientées l'une sur l'autre par les assises des cloisons inclinés (13), raccordés à la surface intérieure de la bande périphérique (15) par l'intermédiaire des nervures radiales (25)..

2. Le clapet selon la Revendication 1, qui est **caractérisé en ce que** la bague d'arrêt (6) et la bague d'étanchéité (5) sont installées en série sur le tuyau (20) entre le mandrin à main (7) et les bagues de guidage (4).

3. Le clapet selon la Revendication 1, qui est **caractérisé en ce que** les bagues de guidage (4) sont fabriquées de la matière plastique, cependant la surface frontale de la bande périphérique (15) de chacune d'elles contient des saillies (16) et des orifices (17) pour l'alignement par rapport aux orifices (17) et aux saillies (16) sur la surface frontale des autres bagues de guidage (4).

4. Le clapet selon la Revendication 1, qui est **caractérisé en ce que** la bague centrale (14) de chaque bague de guidage (4) est formée avec les rainures autour de l'orifice pour la tige (2).

5. Le clapet selon la Revendication 1, qui est **caractérisé en ce que** l'élément d'arrêt à plaques (11) avec une saillie ronde au centre et avec une bague d'étanchéité élastique (3) est formé sur la partie d'interaction avec la siège (2).

6. Le clapet selon la Revendication 1, qui est **caractérisé en ce que** ses composants sont fabriqués de la matière plastique.

7. Le clapet selon la Revendication 1, qui est **caractérisé en ce que** la cage (1) et l'écrous (8) sont formés par gradins et possèdent des nervures radiales extérieures (18, 19).
